# EUROPEAN PATENT APPLICATION

(11) **EP 4 783 088 A1**
(43) Date of publication of application: **29.07.2026**
(21) Application number: 24897015.4
(22) Date of filing: 28.08.2024
(51) Int. Cl.: G06Q 10/20, G06Q 10/0631, G06Q 50/40

(54) **WORK PLAN MANAGEMENT SYSTEM, WORK MANAGEMENT SUPPORT SYSTEM, AND WORK PLAN MANAGEMENT METHOD**

(30) Priority: 28.11.2023 JP 2023200707
(71) Applicant: Mitsubishi Heavy Industries, Ltd., Chiyoda-ku Tokyo 100-8332 (JP)
(72) Inventor: SHIROTORI, Kento, Tokyo 100-8332 (JP); YAMAZAKI, Shinsuke, Tokyo 100-8332 (JP); TORIMOTO, Kazutaka, Nagoya-shi, Aichi 460-0008 (JP)
(74) Representative: Hoffmann Eitle
(86) International application number: PCT/JP2024/030663
(87) International publication number: WO 2025/115324

(57) **Abstract**

This work plan management system for planning and managing maintenance work for aircraft comprises: a control unit that acquires monitoring information obtained by monitoring the state of an aircraft and acquires resource information required for executing the maintenance work of the aircraft, on the basis of the acquired monitoring information; and a display unit that displays the resource information. The control unit executes: a step for determining, on the basis of the monitoring information, whether or not there is the aircraft on which the maintenance work can be executed; a step for acquiring, on the basis of the monitoring information, a type of the maintenance work to be executed on the aircraft subject to the maintenance work; a step for acquiring, on the basis of the acquired type of the maintenance work, a procedure associated with the maintenance work and the degree of sufficiency of resources required for the maintenance work associated with the procedure; and a step for displaying, on the display unit, the acquired procedure and the degree of sufficiency of the resources as the resource information in association with the maintenance work.

## Description

### Technical Field

The present disclosure relates to a work plan management system for an aircraft, a work management support system, and a work plan management method.

### Background Art

In the related art, a work plan formulation device that formulates a work plan for achieving predetermined target work by utilizing limited resources such as personnel and materials is known (for example, see PTL 1). In the work plan formulation device, constraint conditions necessary for formulating the work plan are extracted based on the target work, and the work plan based on the constraint conditions is formulated or modified.

### Citation List

### Patent Literature

[PTL 1] Japanese Unexamined Patent Application Publication No. 2002-324157

### Summary of Invention

### Technical Problem

In a case where maintenance work is performed on an aircraft, the maintenance work can be executed when a condition in which all resources such as a usage status of the aircraft, personnel for the maintenance work, parts and equipment required for the maintenance work, a duration and a location required for the maintenance work, and the like are satisfied is met. In the work plan formulation device of PTL 1, these resources are not considered, and it is difficult to smoothly plan the maintenance work for the aircraft.

Therefore, an object of the present disclosure is to provide a work plan management system, a work management support system, and a work plan management method capable of smoothly planning and managing maintenance work for an aircraft.

### Solution to Problem

A work plan management system of the present disclosure is a work plan management system that plans and manages maintenance work for an aircraft, the work plan management system including: a control unit that acquires monitoring information obtained by monitoring a state of the aircraft and that acquires resource information required for executing the maintenance work for the aircraft based on the acquired monitoring information; and a display unit that displays the resource information, in which the control unit executes a step of determining whether or not there is the aircraft that requires the maintenance work, based on the monitoring information, a step of acquiring a type of the maintenance work to be executed on the aircraft that is subject to the maintenance work, based on the monitoring information, a step of acquiring a procedure associated with the maintenance work and a degree of sufficiency of a resource required for the maintenance work associated with the procedure, based on the acquired type of the maintenance work, and a step of displaying the acquired procedure and the acquired degree of sufficiency of the resource, as the resource information, in association with the maintenance work on the display unit.

**In** addition, a work management support system of the present disclosure includes the work plan management system, a maintenance management system that provides reference data in which the procedure and the degree of sufficiency of the resource are associated with each other to the work plan management system and that acquires actual result data in which the procedure and information on the resource after execution of the maintenance work are associated with each other, the actual result data being obtained in the work plan management system, a work support system that acquires, from the work plan management system, work request data of the requested maintenance work to support the maintenance work, and a work record database that records work record data of the maintenance work acquired in the work support system.

**In** addition, a work plan management method of the present disclosure is a work plan management method executed by a work plan management system that plans and manages maintenance work for an aircraft, the work plan management system including a control unit that acquires monitoring information obtained by monitoring a state of the aircraft and that acquires resource information required for executing the maintenance work for the aircraft based on the acquired monitoring information, and a display unit that displays the resource information, the work plan management method, executed by the control unit, including: a step of determining whether or not there is the aircraft that requires the maintenance work, based on the monitoring information; a step of acquiring a type of the maintenance work to be executed on the aircraft that is subject to the maintenance work, based on the monitoring information; a step of acquiring a procedure associated with the maintenance work and a degree of sufficiency of a resource required for the maintenance work associated with the procedure, based on the acquired type of the maintenance work; and a step of displaying the acquired procedure and the acquired degree of sufficiency of the resource, as the resource information, in association with the maintenance work on the display unit.

### Advantageous Effects of Invention

According to the present disclosure, it is possible to smoothly plan and manage the maintenance work for the aircraft.

### Brief Description of Drawings

FIG. 1 is a diagram of a work management support system according to the present embodiment.
FIG. 2 is an explanatory diagram of an example functionally showing the work management support system according to the present embodiment.
FIG. 3 is an explanatory diagram of an example functionally showing the work management support system according to the present embodiment.
FIG. 4 is a flowchart related to a work plan management method according to the present embodiment.
FIG. 5 is a diagram of a resource management screen.

### Description of Embodiments

Embodiments according to the present disclosure will be described in detail below with reference to the drawings. Note that the present disclosure is not limited to the embodiment. Further, components of the following embodiments include components that can be easily substituted by those skilled in the art or components that are substantially the same as the components of the following embodiments. Further, the components described below can be combined as appropriate, and in a case where there are a plurality of embodiments, the embodiments can also be combined.

### [Present Embodiment]

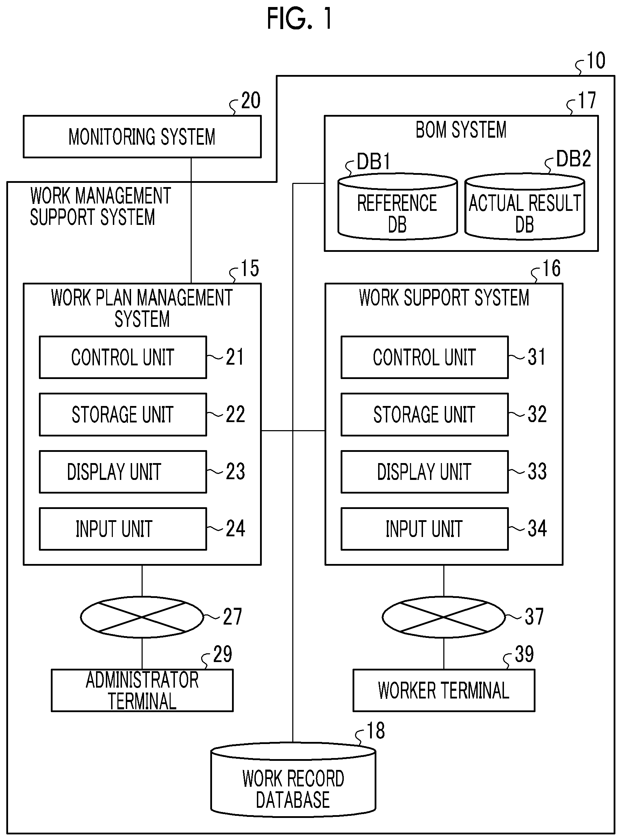

A work management support system 10 according to the present embodiment is a system that manages and supports the maintenance work for the aircraft as an asset, and a plurality of systems are integrated therein. The aircraft to be managed by the work management support system 10 may be a manned aircraft or an unmanned aircraft, and is not particularly limited. The work management support system 10 will be described with reference to FIG. 1.

### (Work Management Support System)

FIG. 1 is a diagram of a work management support system according to the present embodiment. As shown in FIG. 1, the work management support system 10 includes a work plan management system 15, a work support system 16, a bill of materials (BOM) system (maintenance management system) 17, and a work record database 18. In addition, a monitoring system 20 is connected to the work plan management system 15 of the work management support system 10.

### (Work Plan Management System)

The work plan management system 15 is a system that plans and manages the maintenance work for the aircraft, and specifically, is a system that provides information for planning the maintenance work to an administrator. The work plan management system 15 includes a control unit 21, a storage unit 22, a display unit 23, and an input unit 24. **In** addition, an administrator terminal 29 is connected to the work plan management system 15 via a communication network 27. Although not shown, the administrator terminal 29 includes a display unit and an input unit, in the same manner as the work plan management system 15, and can display or input information for planning the maintenance work.

The control unit 21 includes, for example, an integrated circuit such as a central processing unit (CPU). The control unit 21 executes data processing for providing information necessary for planning the maintenance work. The storage unit 22 is any storage device such as a semiconductor storage device or a magnetic storage device. The storage unit 22 stores information acquired from various systems, information generated by various types of processing, and the like. The display unit 23 is, for example, a display device such as a liquid crystal display. The input unit 24 is, for example, an input device such as a keyboard and a mouse.

The work plan management system 15 is connected to the monitoring system 20, and acquires monitoring information on the aircraft from the monitoring system 20. The monitoring information is information obtained by monitoring a state of the aircraft, and includes, for example, information on an operational status and a failure status of the aircraft, and information on the maintenance work requested for the aircraft. The work plan management system 15 executes data processing of providing resource information, which is information on a resource for the maintenance work, based on the monitoring information acquired from the monitoring system 20 and information acquired from the work support system 16, the BOM system 17, and the work record database 18.

The work support system 16 is a system that supports the maintenance work planned in the work plan management system 15, and specifically, presents a work procedure of the maintenance work to a worker or executes work record of the maintenance work. The work support system 16 is disposed, for example, for each base, and a plurality of the work support systems 16 are provided. The base may be in the same site such as a factory, an airport, and a station, or may be provided in different sites, and is not particularly limited.

The work support system 16 includes a control unit 31, a storage unit 32, a display unit 33, and an input unit 34, in the same manner as the work plan management system 15. The work support system 16 may be a wearable terminal or a stationary terminal, and is not particularly limited. In addition, a worker terminal 39 is connected to the work support system 16 via the communication network 37. Although not shown, the worker terminal 39 includes a display unit and an input unit, in the same manner as the work support system 16, and can display information for supporting the maintenance work or input information for recording the work.

The control unit 31 includes, for example, an integrated circuit such as a central processing unit (CPU). The control unit 31 executes data processing for providing information for supporting the maintenance work. The storage unit 32 is any storage device such as a semiconductor storage device or a magnetic storage device. The storage unit 32 stores information acquired from the work plan management system 15, information generated by various types of processing, and the like. The display unit 33 is, for example, a display device such as a liquid crystal display. The input unit 34 is, for example, an input device such as a keyboard and a mouse.

The work support system 16 presents information on the maintenance work planned in the work plan management system 15 to the worker. In addition, the work support system 16 generates information on the progress of the maintenance work and information on the actual result of the maintenance work when the worker inputs information on the work record of the maintenance work. The work support system 16 outputs the generated information on the actual result of the maintenance work to the work record database 18.

The BOM system 17 stores information for managing the maintenance work, and has a data format defined in advance. The BOM system 17 includes a reference database DB1 for storing information (reference data) that serves as a reference for the maintenance work, and an actual result database DB2 for storing information (actual result data) that serves as an actual result of the maintenance work. The reference data and the actual result data are information on a resource in which the work procedure of the maintenance work, a location required for the maintenance work, equipment required for the maintenance work, parts required for the maintenance work, personnel for the maintenance work, and a work duration required for the maintenance work are associated with each other. The reference data and the actual result data have an identical data format. The BOM system 17 provides the reference data and the actual result data to the work plan management system 15, or acquires the actual result data from the work plan management system 15.

The work record database 18 stores work record data of the maintenance work. The work record database 18 stores a work actual result record DB3 and an operation record DB4 as the work record data. The work actual result record DB3 is information recorded after completion of the maintenance work, and includes information on a maintenance location input by the worker, image information acquired by the imaging device, and the like. The operation record DB4 is information in which an operation of the maintenance work by the worker is recorded. The work record database 18 provides the work record data to the work plan management system 15, or acquires the work record data from the work support system 16.

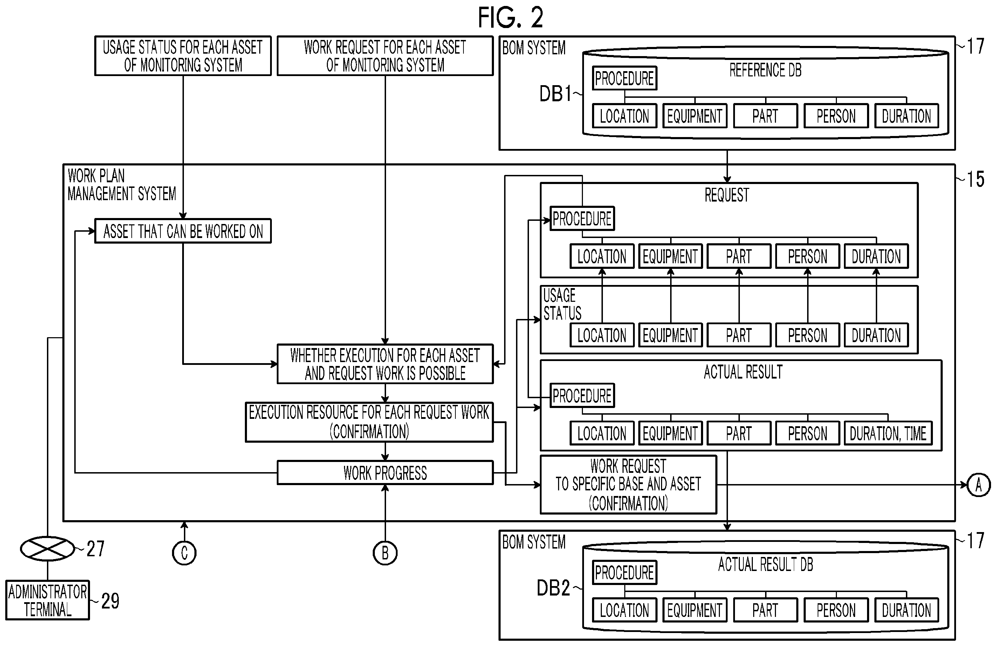

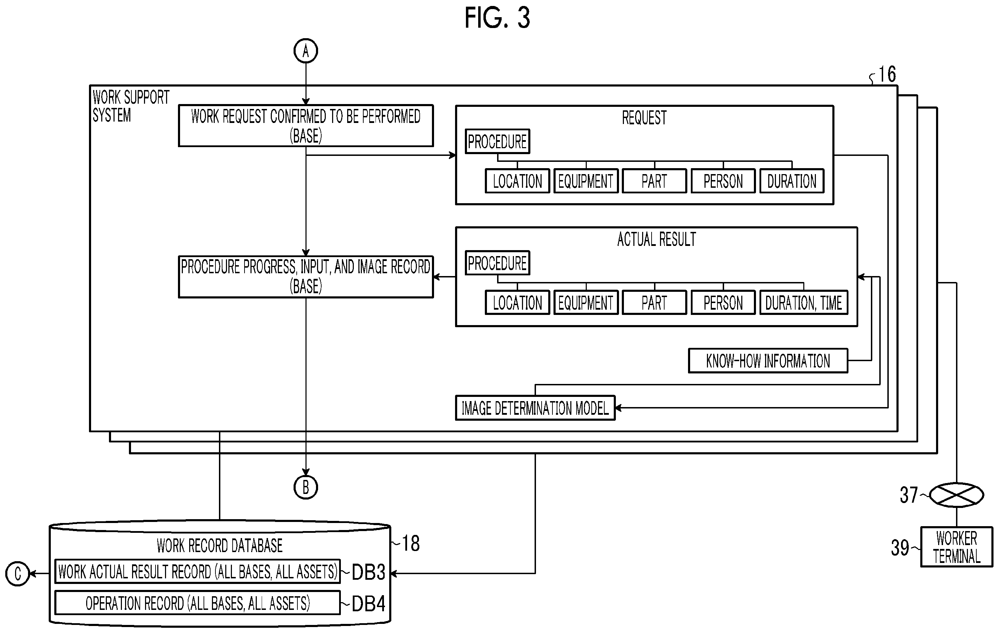

Next, an outline of the functions of the work management support system 10 will be described with reference to FIGS. 2 and 3. FIGS. 2 and 3 are explanatory diagrams of an example functionally showing the work management support system according to the present embodiment. In FIGS. 2 and 3, the aircraft is treated as an asset. As shown in FIG. 2, in the work management support system 10, the work plan management system 15 acquires the usage status for each asset (aircraft) from the monitoring system 20, and determines whether or not there is an asset that requires the maintenance work.

When it is determined that there is an asset that requires the maintenance work, the work plan management system 15 acquires information on the maintenance work requested for each asset from the monitoring system 20. In addition, the work plan management system 15 acquires reference data on the resource associated with the requested maintenance work from the reference database DB1 of the BOM system 17. The work plan management system 15 acquires the degree of sufficiency of the resource associated with the requested maintenance work, based on the information on the progress of the maintenance work acquired by the work support system 16. The work plan management system 15 displays the acquired information on the requested maintenance work, the information on the resource associated with the requested maintenance work, and the degree of sufficiency of the resource as the resource information on the display unit 23.

In addition, when the requested maintenance work is selected and confirmed, the work plan management system 15 outputs the resource information associated with the selected maintenance work to the work support system 16 as the work request data of the requested maintenance work.

As shown in FIG. 3, in a case where the work support system 16 acquires the work request data from the work plan management system 15, the work support system 16 supports the maintenance work based on the work request data. The work support system 16 presents the work procedure of the maintenance work to the worker via the display unit 33. In addition, the work support system 16 outputs the work record data input by the worker to the work record database 18. Further, the work support system 16 outputs the work progress based on the work record input by the worker to the work plan management system 15.

The work plan management system 15 manages the work progress of the selected maintenance work, based on the information on the progress of the maintenance work acquired by the work support system 16. When it is determined that the maintenance work is completed based on the work progress of the maintenance work, the work plan management system 15 outputs the resource information that is the actual result acquired after the completion of the maintenance work as the actual result data to the actual result database DB2 of the BOM system 17.

### (Work Plan Management Method)

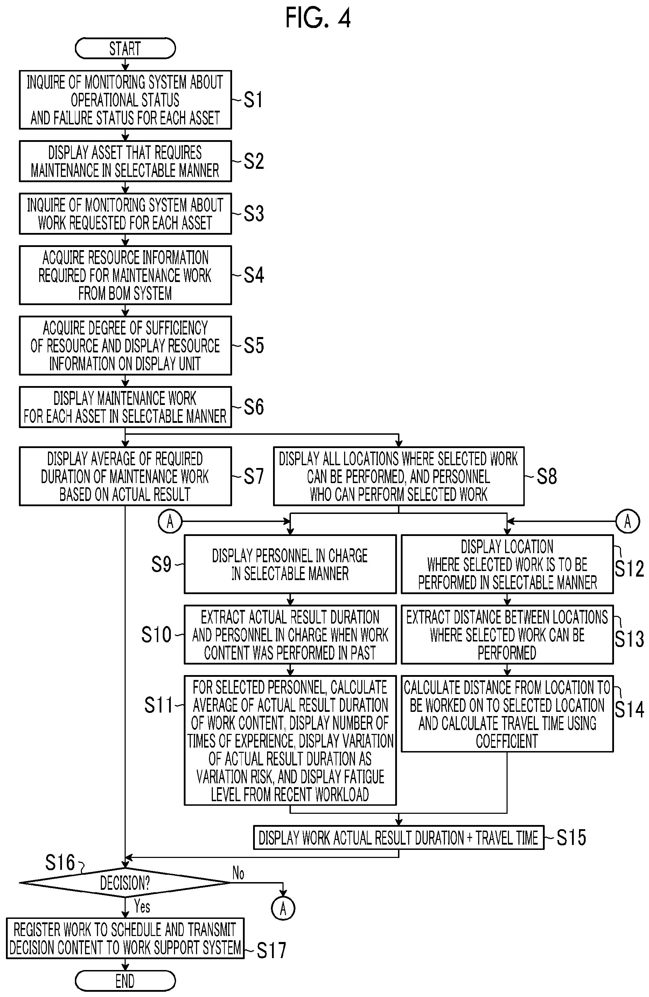

Next, a work plan management method according to the present embodiment will be described with reference to FIG. 4. FIG. 4 is a flowchart related to the work plan management method according to the present embodiment. The work plan management method shown in FIG. 4 is executed in the work plan management system 15. The control unit 21 of the work plan management system 15 inquires of the monitoring system 20 about the operational status and the failure status for each asset (step S1). That is, in step S1, the control unit 21 requests, from the monitoring system 20, the monitoring information including the information on the operational status and the failure status of the asset to acquire the monitoring information.

Subsequently, the control unit 21 displays the asset that requires the maintenance work on the display unit 23 in a selectable manner, based on the acquired monitoring information (step S2). That is, in step S2, the control unit 21 determines whether or not there is the asset that requires the maintenance work, based on the monitoring information, and in a case where there is the asset that requires the maintenance work, the control unit 21 displays the asset that requires the maintenance work on the display unit 23 in a selectable manner.

Thereafter, the control unit 21 inquires of the monitoring system 20 about the maintenance work requested for each asset (step S3). That is, in step S3, the control unit 21 requests, from the monitoring system 20, the monitoring information including the information on the maintenance work requested for each asset to acquire the monitoring information. The control unit 21 may acquire the information on the requested maintenance work from the BOM system 17 based on the monitoring information. In this case, in the BOM system 17, the monitoring information and the information on the maintenance work are associated with each other.

The control unit 21 acquires the resource information corresponding to the maintenance work from the reference database DB1 of the BOM system 17 based on the acquired monitoring information (step S4). The control unit 21 acquires the degree of sufficiency of the resource associated with the requested maintenance work, based on the information on the progress of the maintenance work acquired by the work support system 16 (step S5). In step S5, the control unit 21 displays the information on the requested maintenance work, the information on the resource associated with the requested maintenance work, and the degree of sufficiency of the resource as the resource information on the display unit 23. In addition, the control unit 21 displays the maintenance work for each asset on the display unit 23 in a selectable manner, based on the resource information (step S6). In step S6, the resource information is displayed on a resource management screen 50 shown in FIG. 4.

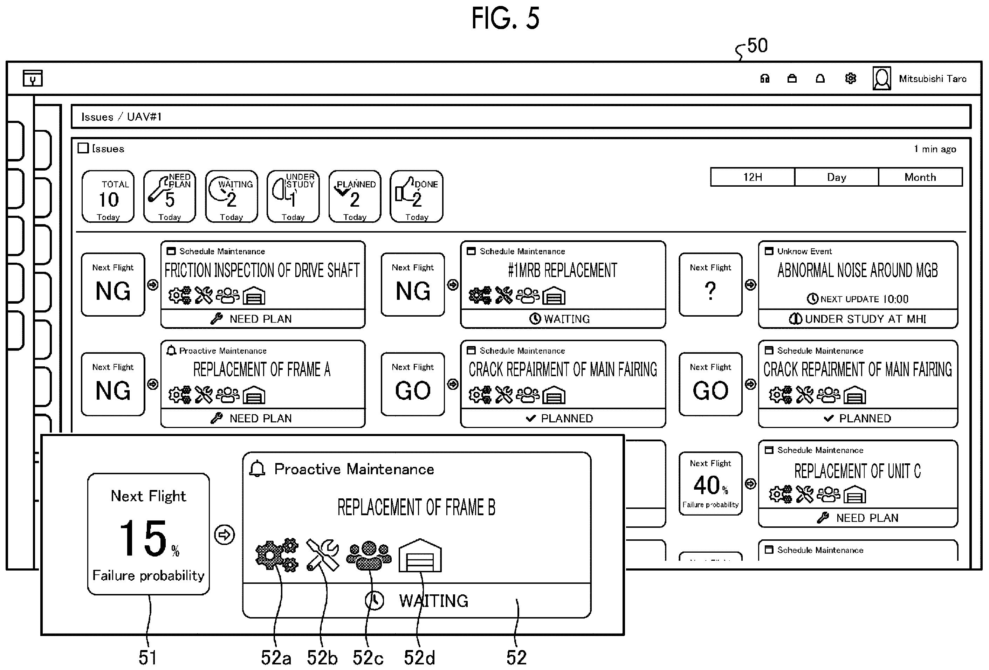

Here, the resource information displayed on the display unit 23 will be described with reference to FIG. 5. FIG. 5 is a diagram of the resource management screen. The resource information is displayed on the resource management screen 50 displayed on the display unit 23. The resource management screen 50 includes an operation icon 51, a maintenance work item 52, and resource icons 52a to 52d.

The operation icon 51 is an icon indicating whether a continued operation of the asset (aircraft) is possible. The operation icon 51 displays, for example, a percentage indicating a possibility of being inoperable, in addition to "GO" indicating that the asset is operable and "NG" indicating that the asset is inoperable. In addition, the operation icon 51 differentiates the display form depending on whether the continued operation is possible, and for example, differentiates the display color.

The maintenance work item 52 is an item indicating the type of the maintenance work associated with the operation icon 51. The maintenance work item 52 displays, for example, the maintenance work content such as "replacement of frame B".

The resource icons 52a to 52d are icons indicating the degree of sufficiency of the resource associated with the maintenance work item 52. The resource icons 52a to 52d include, for example, a part icon 52a, an equipment icon 52b, a person icon 52c, and a location icon 52d. The part icon 52a displays the degree of sufficiency of the part required for the maintenance work. The equipment icon 52b displays the degree of sufficiency of the equipment required for the maintenance work. The person icon 52c displays the presence or absence of the worker who executes the maintenance work. The location icon 52d displays the presence or absence of the location required for the maintenance work. The resource icons 52a to 52d have a different display form depending on the degree of sufficiency. The resource icons 52a to 52d have a display form corresponding to the degree of sufficiency, for example, by differentiating the display color.

Referring to FIG. 4 again, in a case where the resource management screen 50 is displayed on the display unit 23 in step S6 and the predetermined maintenance work is selected by the administrator, the control unit 21 displays the average of the required duration for the maintenance work based on the actual result data (step S7). In step S7, the control unit 21 acquires the actual result data from the actual result database DB2 of the BOM system 17, acquires the work duration serving as the actual result included in the actual result data, calculates the average duration of the acquired work duration, and displays the average duration on the display unit 23. The displayed actual result data may be a value calculated based on the work duration spent on the maintenance work, and may be a median value or a peak value of the standard deviation, in addition to the average duration (average value).

In addition, the control unit 21 processes step S8 in parallel with step S7. After step S6 is executed, the control unit 21 displays all the locations and personnel of the resource information corresponding to the selected maintenance work (step S8). After step S8 is executed, the control unit 21 executes step S9 and step S12 for causing the details of the resource to be set for the resource information associated with the selected maintenance work. Specifically, the control unit 21 displays the personnel who are in charge of the maintenance work in a selectable manner (step S9) and displays the location where the maintenance work is to be performed in a selectable manner (step S12). After step S9 is executed, the control unit 21 extracts an execution duration and personnel in charge when the work content was performed in the past (step S10). In a case where the personnel are selected by the administrator, the control unit 21 displays the information on the selected personnel (step S11). In step S11, the control unit 21 calculates and displays the average of the work duration that is the actual result of the maintenance work, the number of times of experience of the maintenance work, the variation risk based on the variation of the work duration that is the actual result, the fatigue level based on the recent workload, and the like as the information on the personnel.

In addition, after step S12 is executed, the control unit 21 extracts the distance between the locations where the maintenance work can be performed, that is, the distance from the location of the asset to be worked on to the selected location (step S13). The control unit 21 calculates the extracted distance and calculates the travel time based on the calculated distance (step S14).

After steps S11 and S14 are executed, the control unit 21 displays the work duration that is the actual result of the maintenance work and the travel time on the display unit 23 (step S15). After step S7 or step S15 is executed, the control unit 21 determines whether or not the maintenance work is decided (step S16). In step S16, in a case where the control unit 21 determines that the maintenance work is not decided (step S16: No), the control unit 21 proceeds to the selection display of the location and the personnel in step S9 and step S12.

In step S16, in a case where the control unit 21 determines that the maintenance work is decided (step S16: Yes), the control unit 21 registers the schedule for managing the progress of the maintenance work and transmits the work request data of the decided maintenance work to the work support system 16 (step S17).

As described above, the work plan management system 15, the work management support system 10, and the work plan management method described in the present embodiment are understood as follows, for example.

A work plan management system 15 according to a first aspect is a work plan management system 15 that plans and manages maintenance work for an aircraft, the work plan management system 15 including: a control unit 21 that acquires monitoring information obtained by monitoring a state of the aircraft and that acquires resource information required for executing the maintenance work for the aircraft based on the acquired monitoring information; and a display unit 23 that displays the resource information, in which the control unit 21 executes a step S2 of determining whether or not there is the aircraft that requires the maintenance work, based on the monitoring information, a step S3 of acquiring a type of the maintenance work to be executed on the aircraft that is subject to the maintenance work, based on the monitoring information, a step S4 of acquiring a procedure associated with the maintenance work and a degree of sufficiency of a resource required for the maintenance work associated with the procedure, based on the acquired type of the maintenance work, and a step S5, S6 of displaying the acquired procedure and the acquired degree of sufficiency of the resource, as the resource information, in association with the maintenance work on the display unit 23.

With this configuration, in a case where the maintenance work is performed on the aircraft, the maintenance work can be executed in consideration of the usage status of the aircraft and the resource for the maintenance work. **In** this case, since the degree of sufficiency of the resource associated with the procedure of the maintenance work can be acquired, it is possible to understand the status of the resource based on the procedure. Therefore, the maintenance work for the aircraft in consideration of the resource can be planned based on the procedure, and the maintenance work for the aircraft can be smoothly planned and managed.

As a second aspect, in the work plan management system 15 according to the first aspect, in the step S4 of acquiring the procedure and the degree of sufficiency of the resource, reference data in which the procedure and the degree of sufficiency of the resource are associated with each other is acquired from a maintenance management system (BOM system 17), the control unit 21 outputs, to the maintenance management system, actual result data in which the procedure and information on the resource after execution of the maintenance work are associated with each other, the actual result data being acquired after the execution of the maintenance work, and the reference data and the actual result data have an identical data format.

With this configuration, since the reference data and the actual result data can have the identical data format, it is possible to utilize the actual result data.

As a third aspect, in the work plan management system 15 according to the first or second aspect, the resource includes at least one of a location, equipment, a part, a person, and a duration.

With this configuration, the maintenance work can be planned in consideration of the resource necessary for the maintenance work for the aircraft.

As a fourth aspect, in the work plan management system 15 according to any one of the first to third aspects, the control unit 21 further executes a step S9, S12 of causing details of the resource to be set for the resource information associated with the maintenance work that is displayed and selected on the display unit 23.

With this configuration, it is possible to set the resource corresponding to the maintenance work for the aircraft in detail.

As a fifth aspect, in the work plan management system 15 according to any one of the first to fourth aspects, the control unit 21 displays actual result data in the past required for the maintenance work that is displayed and selected on the display unit 23.

With this configuration, by displaying the actual result data in the past, the maintenance work for the aircraft corresponding to the actual result can be planned.

As a sixth aspect, in the work plan management system 15 according to the fifth aspect, the actual result data is data in which the procedure and information on the resource after execution of the maintenance work are associated with each other, and the actual result data displayed on the display unit 23 is a value calculated based on a work duration spent on the maintenance work.

With this configuration, the maintenance work for the aircraft can be planned in consideration of an average value of the work duration of the maintenance work.

As a seventh aspect, in the work plan management system 15 according to any one of the first to sixth aspects, the control unit 21 further executes a step S17 of outputting the resource information associated with the maintenance work that is displayed and selected on the display unit 23, as work request data of the requested maintenance work, to a work support system 16 that supports the maintenance work.

With this configuration, the maintenance work can be supported by the work support system 16 based on the resource information of the planned maintenance work.

As an eighth aspect, in the work plan management system 15 according to any one of the first to seventh aspects, the resource information is displayed on a resource management screen 50 displayed on the display unit 23, the resource management screen 50 includes an operation icon 51 indicating whether a continued operation of the aircraft is possible, a maintenance work item 52 indicating the type of the maintenance work associated with the operation icon 51, and resource icons 52a to 52d indicating the degree of sufficiency of the resource associated with the maintenance work item 52, and the resource icons 52a to 52d have a different display form depending on the degree of sufficiency.

With this configuration, it is possible to easily ascertain the degree of sufficiency of the resource by visual recognition.

A work management support system 10 according to a ninth aspect includes the work plan management system 15, a maintenance management system (BOM system 17) that provides reference data in which the procedure and the degree of sufficiency of the resource are associated with each other to the work plan management system 15 and that acquires actual result data in which the procedure and information on the resource after execution of the maintenance work are associated with each other, the actual result data being obtained in the work plan management system 15, a work support system 16 that acquires, from the work plan management system 15, work request data of the requested maintenance work to support the maintenance work; and a work record database 18 that records work record data of the maintenance work acquired in the work support system 16.

With this configuration, the maintenance work for the aircraft can be smoothly planned and managed by the work plan management system 15, and the support for the maintenance work, the recording of the maintenance work, and the like can be smoothly performed by cooperating with other systems.

A work plan management method according to a tenth aspect is a work plan management method executed by a work plan management system 15 that plans and manages maintenance work for an aircraft, the work plan management system 15 including a control unit 21 that acquires monitoring information obtained by monitoring a state of the aircraft and that acquires resource information required for executing the maintenance work for the aircraft based on the acquired monitoring information, and a display unit 23 that displays the resource information, the work plan management method, executed by the control unit 21, including: a step S2 of determining whether or not there is the aircraft that requires the maintenance work, based on the monitoring information; a step S3 of acquiring a type of the maintenance work to be executed on the aircraft that is subject to the maintenance work, based on the monitoring information; a step S4 of acquiring a procedure associated with the maintenance work and a degree of sufficiency of a resource required for the maintenance work associated with the procedure, based on the acquired type of the maintenance work; and a step S5, S6 of displaying the acquired procedure and the acquired degree of sufficiency of the resource, as the resource information, in association with the maintenance work on the display unit.

With this configuration, in a case where the maintenance work is performed on the aircraft, the maintenance work can be executed in consideration of the usage status of the aircraft and the resource for the maintenance work. **In** this case, since the degree of sufficiency of the resource associated with the procedure of the maintenance work can be acquired, it is possible to understand the status of the resource based on the procedure. Therefore, the maintenance work for the aircraft in consideration of the resource can be planned based on the procedure, and the maintenance work for the aircraft can be smoothly planned and managed.

### Reference Signs List

- 10:: work management support system
- 15:: work plan management system
- 16:: work support system
- 17:: BOM system (maintenance management system)
- 18:: work record database
- 20:: monitoring system
- 21:: control unit
- 22:: storage unit
- 23:: display unit
- 24:: input unit
- 27:: communication network
- 29:: administrator terminal

## Claims

1. A work plan management system that plans and manages maintenance work for an aircraft, the work plan management system comprising:
a control unit that acquires monitoring information obtained by monitoring a state of the aircraft and that acquires resource information required for executing the maintenance work for the aircraft based on the acquired monitoring information; and
a display unit that displays the resource information,
wherein the control unit executes
a step of determining whether or not there is the aircraft that requires the maintenance work, based on the monitoring information,
a step of acquiring a type of the maintenance work to be executed on the aircraft that is subject to the maintenance work, based on the monitoring information,
a step of acquiring a procedure associated with the maintenance work and a degree of sufficiency of a resource required for the maintenance work associated with the procedure, based on the acquired type of the maintenance work, and
a step of displaying the acquired procedure and the acquired degree of sufficiency of the resource as the resource information in association with the maintenance work on the display unit.

2. The work plan management system according to Claim 1,
wherein in the step of acquiring the procedure and the degree of sufficiency of the resource, reference data in which the procedure and the degree of sufficiency of the resource are associated with each other is acquired from a maintenance management system,
the control unit outputs, to the maintenance management system, actual result data in which the procedure and information on the resource after execution of the maintenance work are associated with each other, the actual result data being acquired after the execution of the maintenance work, and
the reference data and the actual result data have an identical data format.

3. The work plan management system according to Claim 1,
wherein the resource includes at least one of a location, equipment, a part, a person, and a duration.

4. The work plan management system according to Claim 1,
wherein the control unit further executes a step of causing details of the resource to be set for the resource information associated with the maintenance work that is displayed and selected on the display unit.

5. The work plan management system according to Claim 1,
wherein the control unit displays actual result data in the past required for the maintenance work that is displayed and selected on the display unit.

6. The work plan management system according to Claim 5,
wherein the actual result data is data in which the procedure and information on the resource after execution of the maintenance work are associated with each other, and
the actual result data displayed on the display unit is a value calculated based on a work duration spent on the maintenance work.

7. The work plan management system according to Claim 1,
wherein the control unit further executes a step of outputting the resource information associated with the maintenance work that is displayed and selected on the display unit, as work request data of the requested maintenance work, to a work support system that supports the maintenance work.

8. The work plan management system according to Claim 1,
wherein the resource information is displayed on a resource management screen displayed on the display unit,
the resource management screen includes
an operation icon indicating whether a continued operation of the aircraft is possible,
a maintenance work item indicating the type of the maintenance work associated with the operation icon, and
resource icons indicating the degree of sufficiency of the resource associated with the maintenance work item, and
the resource icons have a different display form depending on the degree of sufficiency.

9. A work management support system comprising:
the work plan management system according to any one of Claims 1 to 8;
a maintenance management system that provides reference data in which the procedure and the degree of sufficiency of the resource are associated with each other to the work plan management system and that acquires actual result data in which the procedure and information on the resource after execution of the maintenance work are associated with each other, the actual result data being obtained in the work plan management system;
a work support system that acquires, from the work plan management system, work request data of the requested maintenance work to support the maintenance work; and
a work record database that records work record data of the maintenance work acquired in the work support system.

10. A work plan management method executed by a work plan management system that plans and manages maintenance work for an aircraft, the work plan management system including a control unit that acquires monitoring information obtained by monitoring a state of the aircraft and that acquires resource information required for executing the maintenance work for the aircraft based on the acquired monitoring information, and a display unit that displays the resource information, the work plan management method, executed by the control unit, comprising:
a step of determining whether or not there is the aircraft that requires the maintenance work, based on the monitoring information;
a step of acquiring a type of the maintenance work to be executed on the aircraft that is subject to the maintenance work, based on the monitoring information;
a step of acquiring a procedure associated with the maintenance work and a degree of sufficiency of a resource required for the maintenance work associated with the procedure, based on the acquired type of the maintenance work; and
a step of displaying the acquired procedure and the acquired degree of sufficiency of the resource, as the resource information, in association with the maintenance work on the display unit.
